# EUROPEAN PATENT APPLICATION

(11) **EP 1 947 814 A2**
(43) Date of publication of application: **23.07.2008**
(21) Application number: 08100679.3
(22) Date of filing: 21.01.2008
(51) Int. Cl.: H04L 12/58

(54) **Telephone personalisation system and methods**

(30) Priority: 19.01.2007 US 885642 P; 18.01.2008 US 16240
(71) Applicant: Cellfish Media, LLC, New York, NY 10019 (US)
(72) Inventor: Gaume, Nicloas, 94100, Saint Maur de Fosses (FR)
(74) Representative: Cordina, Kevin John

(57) **Abstract**

A method of projecting information about a user from a device associated with the user to at least one device associated with a group of friends, comprising: receiving from the user a set of contacts, storing the set of contacts in the device associated with the first user; permitting the user to define a group of friends, wherein the group of friends comprises members of the first set of contacts; and storing the first group of friends. User information to be projected to the group of friends is received, device contact information from the set of contacts for each member of the group of friends is retrieved from the device and used to transmit the information to the group of friends; and, confirmation that the information has been associated with the user is received from at least a subset of the devices.

## Description

This application claims priority from Provisional U.S. Patent Application Serial Number 60/885,642, filed January 19, 2007**,** which is hereby incorporated by reference in its entirety.

This application includes material which is subject to copyright protection. The copyright owner has no objection to the facsimile reproduction by anyone of the patent disclosure, as it appears in the Patent and Trademark Office files or records, but otherwise reserves all copyright rights whatsoever.

### FIELD

The instant disclosure relates to the field of telephonic communications and, more specifically, describes a system and methods through which a cellular telephone can push or provide individualized forms of expression.

### BACKGROUND

Cellular telephones are an increasingly prevalent part of society. They permit people to remain in contact through a variety of means, including more traditional voice conversations, as well as through Short Message Service ("SMS") messages and attachments thereto.

As cellular telephone coverage improves and cellular telephones begin to support alternative communications means, such as, without limitation, those based on voice over Internet Protocol ("VoIP") technology, users are becoming increasingly reliant upon their cellular telephones. As a result of the increased usage necessitated by this reliance, users are also becoming more interested in personalizing their phones. For example, some users assign specific ring tones to individual contacts in the telephone's address book, thus permitting them to easily identify the caller associated with an incoming call. Some users even create and/or download additional ring tones.

A recently introduced personalization feature is what is generally referred to as a "ring-back" tone. A ring-back tone is a sound, song, or the like that is played when a caller is attempting to contact a particular user. By way of example, if Joe's mother attempted to call Joe, Joe's mother would hear the ring-back tone Joe selected. In some cases, the ring-back tone can be caller-specific, much like a ring tone.

### SUMMARY

What are needed are additional means through which a cellular telephone or other communications device can be further personalized. Accordingly, the instant disclosure is directed to a telephone personalization system and related methods that substantially obviates one or more of the problems due to limitations and disadvantages of the related art.

Additional features and advantages of the invention will be set forth in the description which follows, and in part will be apparent from this disclosure, or may be learned by practice of the invention. The objectives and other advantages of the instant system and method will be realized and attained by the structure particularly pointed out in this written description, including any claims contained herein and the appended drawings.

Prior personalization systems included only passive means, such as ring tones and ring-back tones, through which a user could personalize their cellular telephone. By contrast, the telephone personalization system described herein permits the user to define social networks (alternatively referred to herein as "tribes") and to project information, including a mood, to members of such social networks or to individual contacts. Users can select from a set of pre-defined attitudes, images, ring tones, and other attributes to be projected, and can add or create their own attributes and/or purchase or download additional attributes to further facilitate personalization.

An embodiment of the personalization system and method comprises a method of projecting information about a first user from a first device associated with the first user to at least one device associated with a first group of friends, comprising receiving from a user a first set of contacts, wherein each contact in the first set of contacts has device contact information associated therewith; storing the first set of contacts in a first device associated with the first user; permitting the user to define the first group of friends, wherein the first group of friends comprises members of the first set of contacts; storing the first group of friends; receiving from the user information to be projected to the first group of friends; retrieving the device contact information from the first set of contacts for each member of the first group of friends; transmitting the information to the first group of friends; and, causing the device associated with each member of the first group of friends to associate the information with the user.

In some embodiments, the first device may be a telephone, such as, without limitation, a cellular telephone. In some embodiments, the device contact information may comprise a Uniform Resource Locator ("URL"); a network address, such as, without limitation, an Internet Protocol address, a Machine Access Code ("MAC") address, or the like; and/or a telephone number. In some embodiments, the information may comprise text, video, a static or animated picture, a ring tone, or the like.

In some embodiments, the step of associating the information with the first user comprises causing the information to be stored as part of a contact list entry in the device. By way of example, without limitation, where the information comprises an image, the image may be substituted for or included with any image currently associated with the user in the device's contact list.

In some embodiments, the information is presented when the device receives a call from the user. By way of example, without limitation, the device may display the text, display the picture, play the ringtone, or play the video, as appropriate, when the device receives an incoming call from the user.

In some embodiments, the method may further comprise identifying as a second device any device associated with a member of the first group of friends that is not capable of utilizing the information and facilitating the installation of software on the second device such that the second device is capable of utilizing the information.

In some embodiments, the information may be transmitted to the device using SMS, HTTP, or other such communications protocol.

In some embodiments, the first group of friends may be stored remotely from the first device, thereby allowing the user to easily modify the first group of friends via a World Wide Web site or the like, without having to incur additional charges on his or her cellular telephone bill, and without needing to have the first device present.

In some embodiments, the first group of friends may comprise one or more entries. By way of example, without limitation, although the method is generally described as applying to a plurality of friends, the method can be readily applied to a single friend, such that the user can convey mood and other information to that individual.

In some embodiments, the information may comprise at least one color. By way of example, without limitation, the device cause any fonts used when displaying information about the user to be displayed in the color; the device may cause the background color of a contact list entry for the user to match or reflect the color; or the device may cause the screen to utilize the color as a background color for any SMS messages received from the user or when a call is received from the user.

Some embodiments comprises a method of projecting information about a first user from a first telephone associated with the first user to at least one telephone associated with a first group of friends, comprising: receiving from a user a first set of contacts, wherein each contact in the first set of contacts has at least one telephone number associated therewith; storing the first set of contacts in a first telephone associated with the first user; permitting the user to define the first group of friends, wherein the first group of friends comprises members of the first set of contacts; storing the first group of friends; identifying as a second telephone any telephone associated with a member of the first group of friends that is not capable of utilizing the information and facilitating the installation of software on the second telephone such that the second telephone is capable of utilizing the information; receiving from the user information to be projected to the first group of friends; retrieving the telephone contact information from the first set of contacts for each member of the first group of friends; transmitting the information to the first group of friends; and, causing the telephone associated with each member of the first group of friends to associate the information with the user.

It is to be understood that both the foregoing general description and the following detailed description are exemplary and explanatory and are intended to provide further explanation of the disclosed telephone personalization system and methods.

### BRIEF DESCRIPTION OF THE DRAWINGS

The accompanying drawings, which are included to provide a further understanding of the disclosed telephone personalization system and methods and are incorporated in and constitute a part of this specification, illustrate various embodiments and, together with the description, serve to explain the principles of at least one embodiment of the disclosed telephone personalization system and methods.

In the drawings:

Figure 1 is a simulated traditional cellular telephone, including a screen.

Figure 2 is an exemplary contact list on a cellular telephone on which the disclosed telephone personalization system and methods have been installed.

Figure 3 is an exemplary introductory user interface.

Figure 4 is an exemplary tribe information entry user interface.

Figure 5 is an exemplary tribe picture selection user interface.

Figure 6 is an exemplary tribe attitude selection user interface.

Figure 7 is an exemplary mood/attitude picture selection user interface.

Figure 8 is an exemplary tribe creation confirmation user interface.

Figure 9 is an exemplary tribe member selection user interface.

Figure 10 is an exemplary tribe membership invitation user interface.

Figure 11 is an exemplary tribe control confirmation user interface.

Figure 12 is an exemplary tribe mood change user interface.

Figure 13 is an exemplary tribe mood change confirmation user interface.

Figure 14 is an exemplary individual contact menu.

Figure 15 is an exemplary individual contact mood selection user interface.

Figure 16 is an exemplary individual contact mood selection confirmation user interface.

Figure 17 is an exemplary user interface through which a user can confirm that a contact is to be deleted from a tribe.

Figure 18 is an exemplary graphical display of the contact being removed from the tribe.

Figure 19 is an exemplary telephone control panel.

Figure 20 is an exemplary user interface through which a user can indicate a desire to purchase additional pictures for use with personalization of the user's cellular telephone.

Figure 21 is an exemplary user interface through which a user can select among a catalog of available pictures.

Figure 22 is an exemplary user interface which can be presented once a user has purchased a selected picture.

Figure 23 is an exemplary user interface through which a purchased picture can be shared with a tribe.

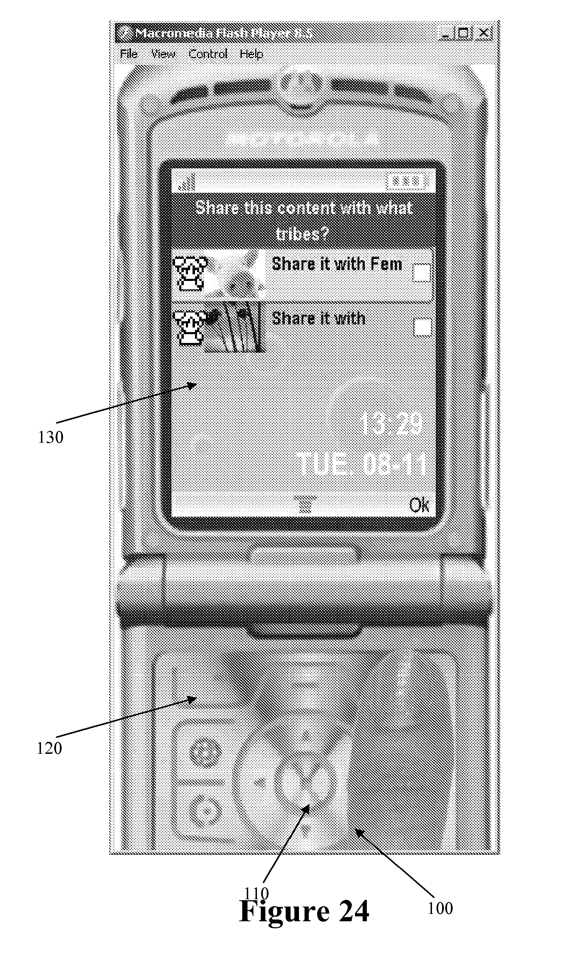

Figure 24 is an exemplary user interface through which a user can select one or more tribes with whom a picture is to be shared.

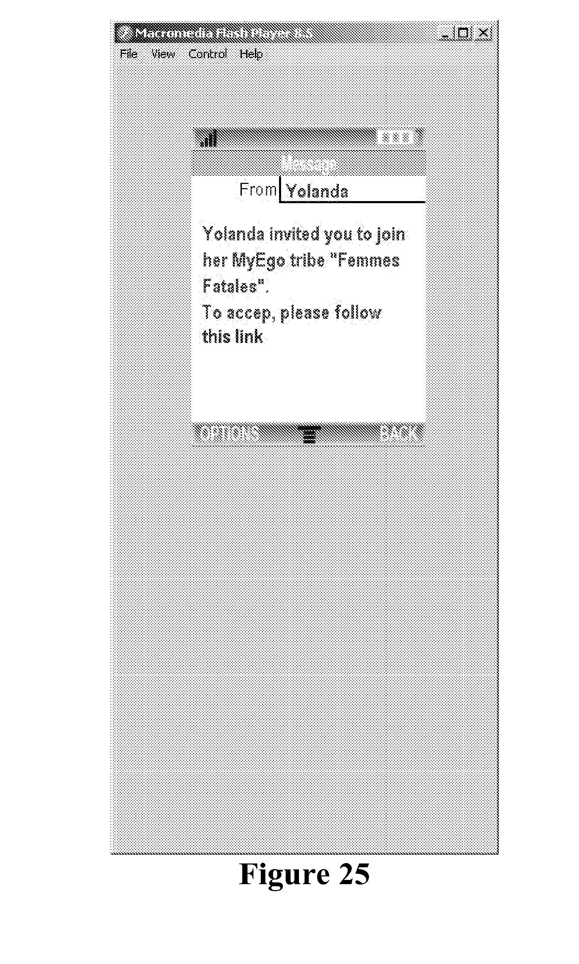

Figure 25 is an exemplary SMS message that facilitates installing software that facilitates the disclosed telephone personalization system and methods.

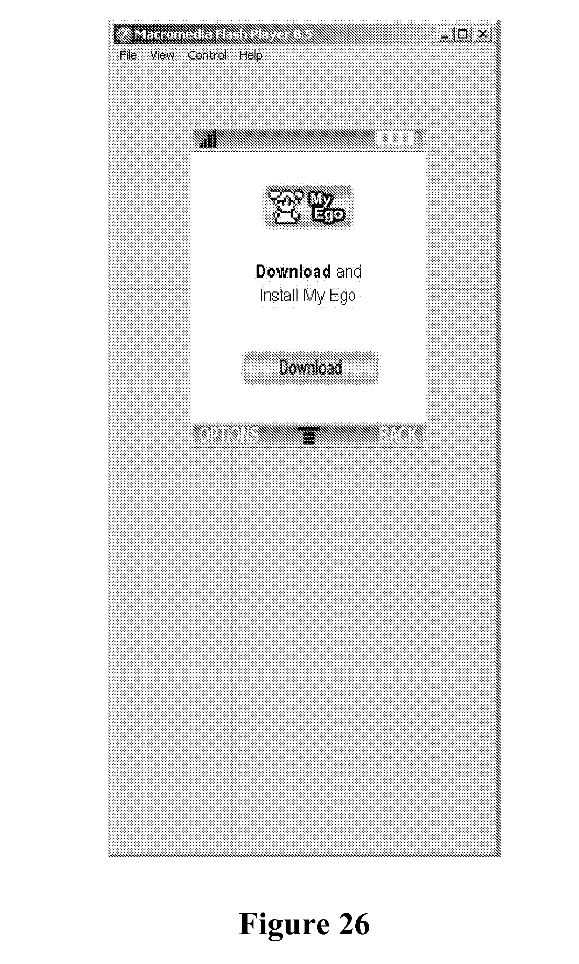

Figure 26 is an exemplary user interface through which a user initiates the installation of software that facilitates the disclosed telephone personalization system and methods.

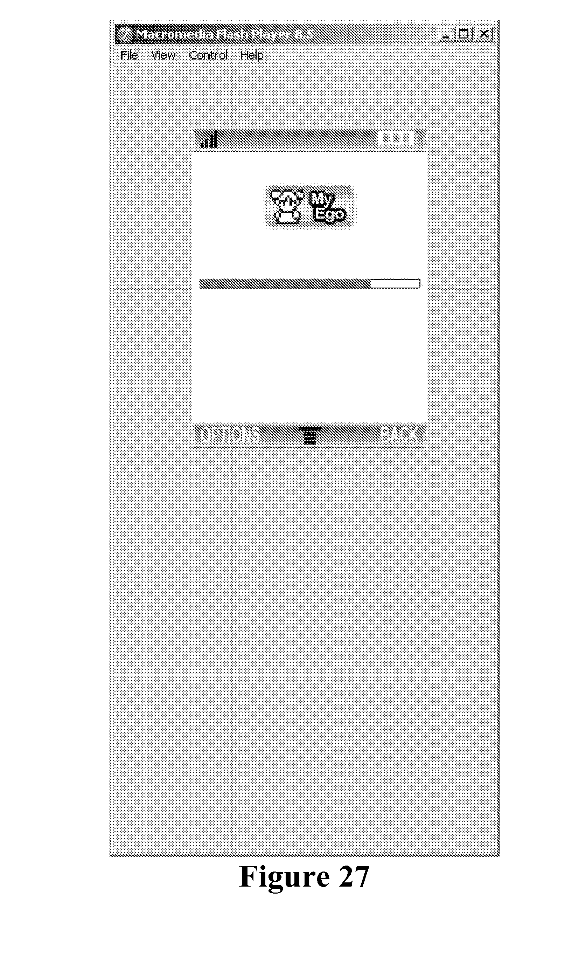

Figure 27 is an exemplary user interface that is displayed as the disclosed telephone personalization system and methods are downloaded and installed on a cellular telephone.

### DETAILED DESCRIPTION

Reference will now be made in detail to embodiments of the disclosed telephone personalization system, examples of which are illustrated in the accompanying drawings.

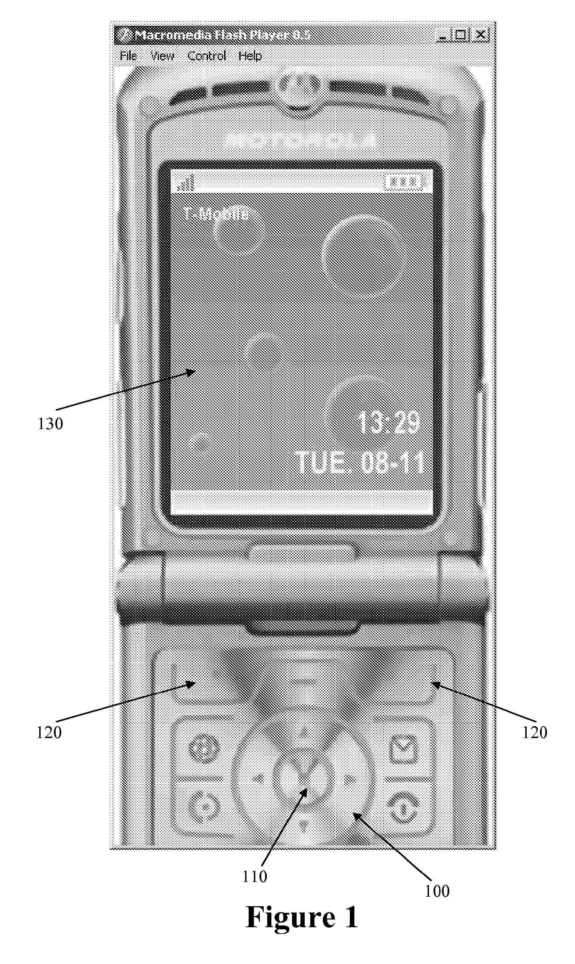

Figure 1 is a simulated traditional cellular telephone. Such a cellular telephone can comprise a navigation means such as navigation button 100, an "enter" button 110, menu selection buttons 120, and a screen 130. Screen 130 can display information to a user, and buttons 100, 110, and 120 can permit the user to interact with the cellular telephone, including facilitating interactions based on information displayed on screen 130.

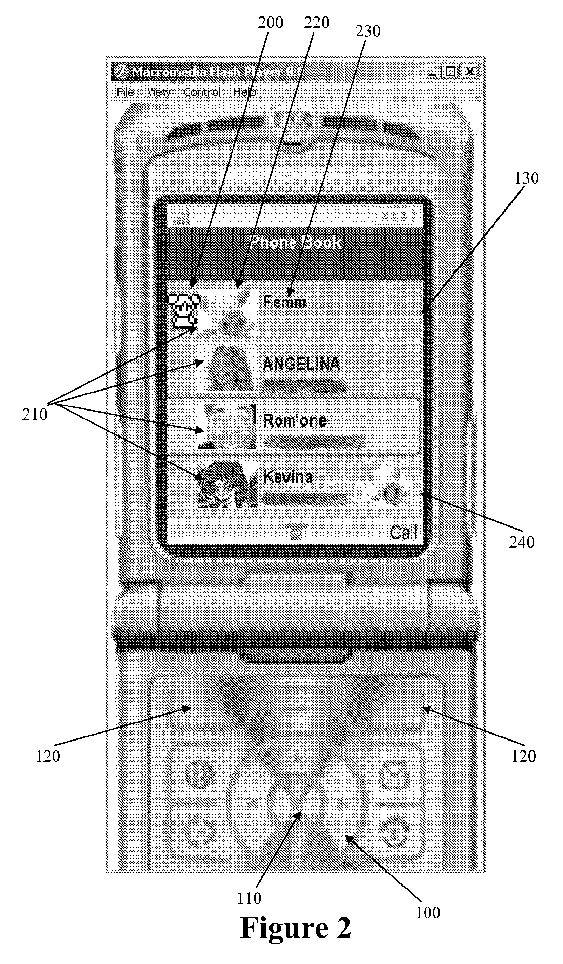

Figure 2 is an exemplary contact list on a cellular telephone on which an embodiments of the disclosed telephone personalization system and methods has been implemented. In the embodiment illustrated in Figure 2, as with traditional contact lists, each contact list entry 210 can have associated therewith a photograph 220. A name 230 and additional information, including, without limitation, one or more E-mail addresses, Internet Protocol ("IP") addresses, and/or telephone numbers, can also be associated with each such contact list entry. In some embodiments, personalization client, which comprises one or more software modules executed by cellular telephone, can modify a contact list entry such that it has one or more tribe icons 200, and one or more tribe membership pictures 240 associated therewith. Tribe icon 200 can be displayed alongside a contact list entry when that entry corresponds to a tribe, thereby providing an easily identifiable means for distinguishing between tribe contact list entries and contact list entries corresponding to a person. The term person, as used herein in the context of contact list entries, is intended to encompass both individuals and other types of entities, including businesses, governmental agencies, service providers, or the like. Tribe membership picture 240 provides a visual means for readily identifying whether a person corresponding to a contact list entry is a member of one or more tribes and, if so, at least one of the tribe(s) of which they are a member.

A tribe is a collection of one or more persons, and represents a social network of people through which the members can interact. As will be discussed in more detail below, a user can create a tribe at will, and can define the members of the tribe. In some embodiments, tribes are user-specific; that is, a tribe member may not have any knowledge of their membership in that particular tribe, or the existence or identity other tribe members. In some embodiments, other users may have knowledge of the other tribe members and/or the existence of the tribe, but may not be permitted to modify a tribe's membership. Some embodiments allow all tribe members to control the tribe's membership, including modifying information associated with another tribe member, voting to remove a member of the tribe, and the like. In some such embodiments, these levels of awareness and control can be modified by the user creating the tribe, thereby providing additional flexibility.

In some embodiments, the telephone personalization system and methods described herein are implemented in software that can be run by a microprocessor or other such device on the cellular telephone, hereinafter referred to as a personalization client. Personalization client may be installed on the telephone at the time the telephone is purchased by the user, or the user may install personalization client after the telephone is purchased. In some embodiments, personalization client may be implemented as one or more software modules written in a portable language, such as, but not limited to, JAVA, J2ME, Binary Runtime Envirement for Wireless ("BREW"), or the like, thereby facilitating software compatibility across various telephone models.

In some embodiments, cellular telephone may comprise a contact list, personalization client, one or more microprocessors, and one or more data storage devices. Personalization client, executing on the cellular telephone, can access the contact list and data stored in the data storage device(s). In some embodiments, the contact list can comprise the contact list elements and functionality described above. In some embodiments, the data storage device(s) may comprise memory internal to the cellular telephone, such as, but not limited to, NAND Flash, NOR Flash, or the like. In some embodiments, the data storage device(s) may further comprise a removable memory device, such as, but not limited to, TransFlash, SecureDigital ("SD"), xD, miniSD, MMC Mobile, hard disk drive, or the like.

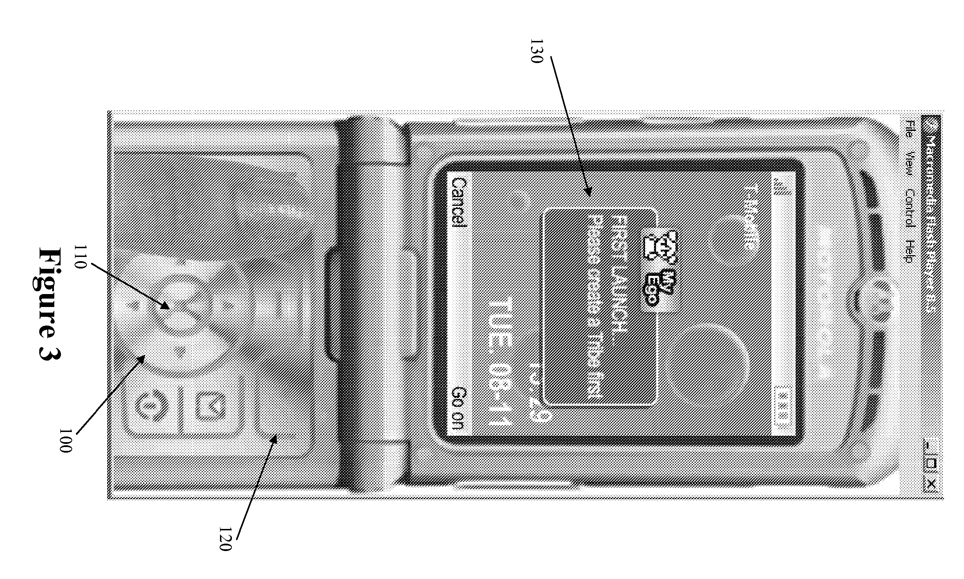

When the user first uses the telephone personalization system and methods, the personalization client can present the user with an exemplary introductory user interface similar to that of Figure 3. In some embodiments, many of the personalization features revolve around the concept of a tribe, and therefore the user may first be prompted to create a tribe. By pressing one of selection buttons 120 the user can indicate their desire to create a tribe. In some embodiments, the tribe creation process walks the user through entering at least a minimum set of information necessary to define a tribe.

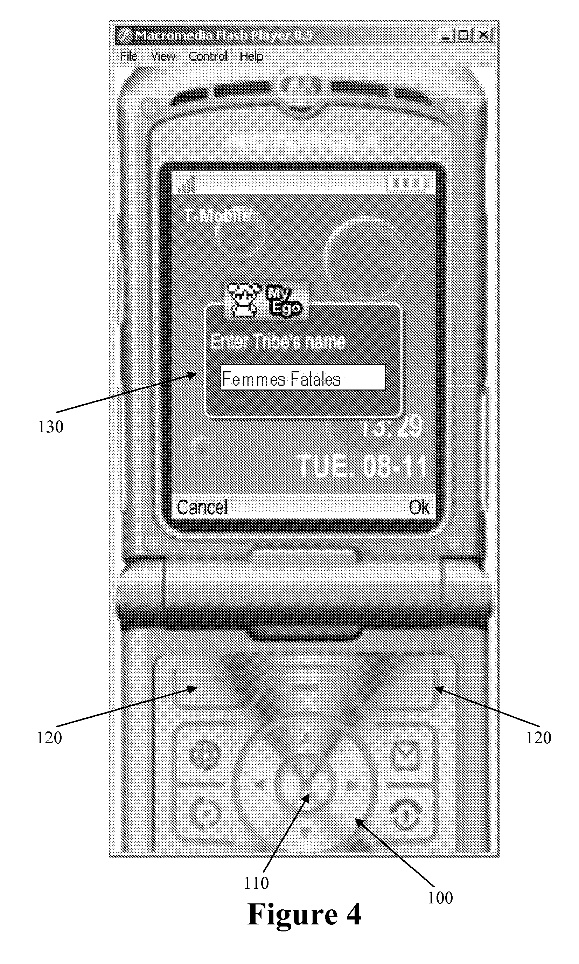

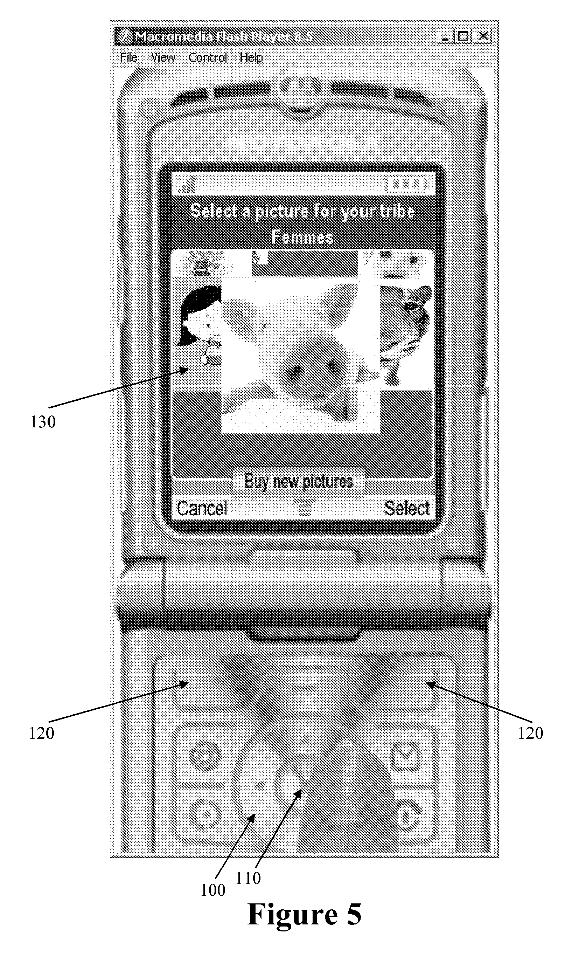

Figure 4 is an exemplary tribe information entry user interface. In this user interface, the user is prompted to enter a name for the tribe. Once the tribe's name has been entered, the user may be prompted to select a picture to be associated with the tribe, such as by using a tribe photograph selection user interface similar to that of Figure 5. Such a picture may be selected from a set of pictures stored on the telephone, including without limitation, photographs taken by the user, photographs sent to the user by other users, pictures sent to the user by other users, pictures and/or photographs provided by third parties, and pictures purchased by the user from one or more service providers. Such pictures may be still or animated, including, without limitation, full motion video. Such pictures may be stored in one or more data storage device(s) of the cellular telephone. Pictures may also be obtained from devices external to the telephone, including devices in communication with the telephone via a wired or wireless Internet connection; a Bluetooth or other wireless connection; or a wired connection. A picture may also have one or more sounds associated therewith, or a sound may be substituted for a picture.

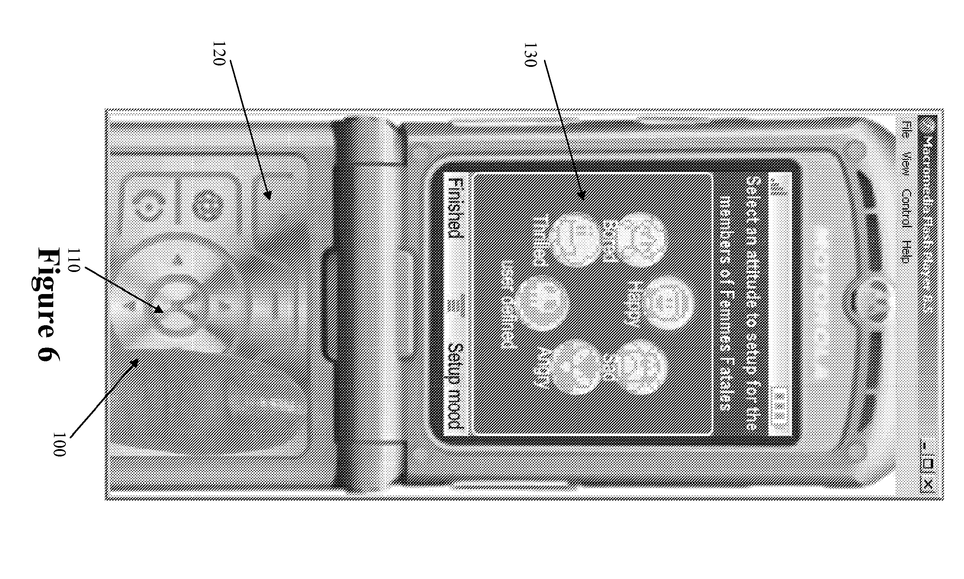

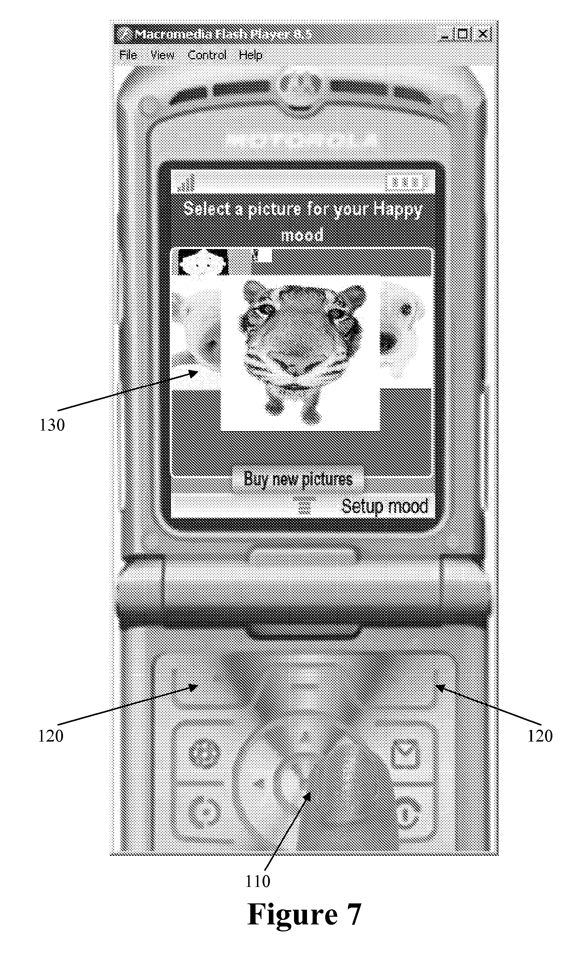

One motivation users may have for using the telephone personalization system and methods described herein is that they can project an attitude or emotion to other tribe members or users. Figure 6 is an exemplary tribe-specific attitude configuration user interface. In such a user interface, the user is able to select from a series of pre-defined attitudes, or to create a new attitude. The user can then define a series of tribe-specific preferences to be associated with the attitude, which can be accomplished via a user interface similar to that of Figure 7. In some embodiments, the attitude may further comprise instructions to actuate the vibrate functionality of tribe member's cellular telephones in relation to the attitude. By way of example, without limitation, if the attitude is "anger", the tribe member's cellular telephones may vibrate in multiple high intensity bursts, whereas if the attitude is "sad", the vibration may be a single long burst of low intensity vibration.

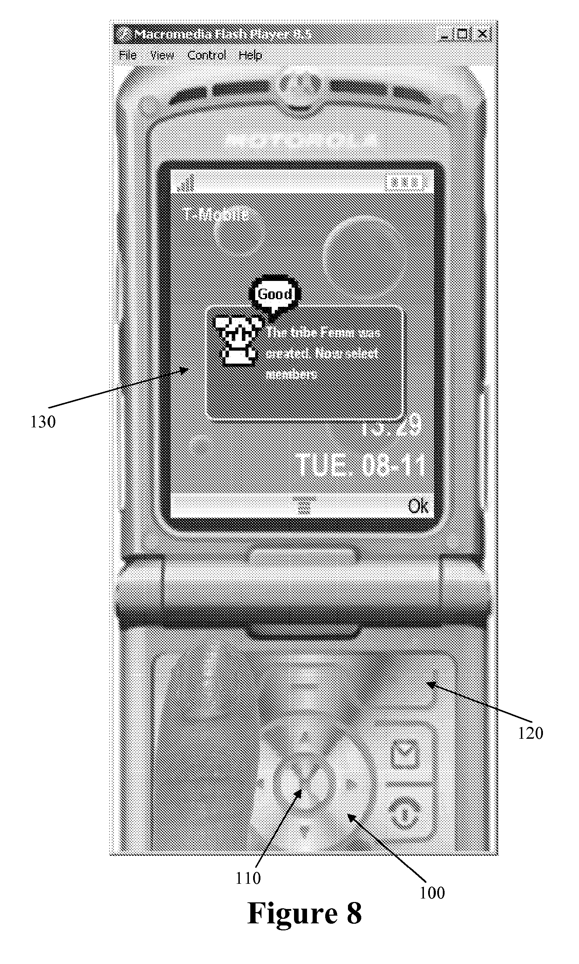

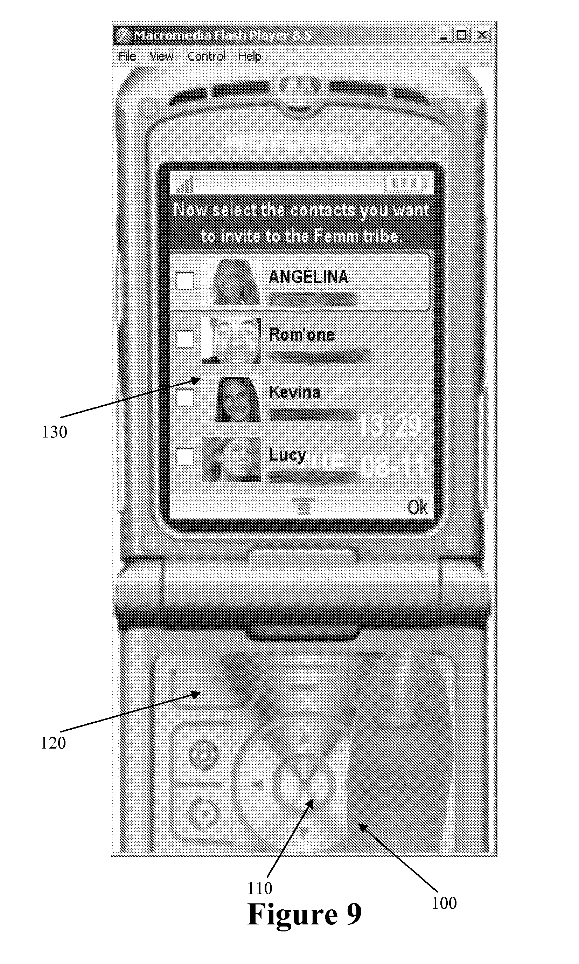

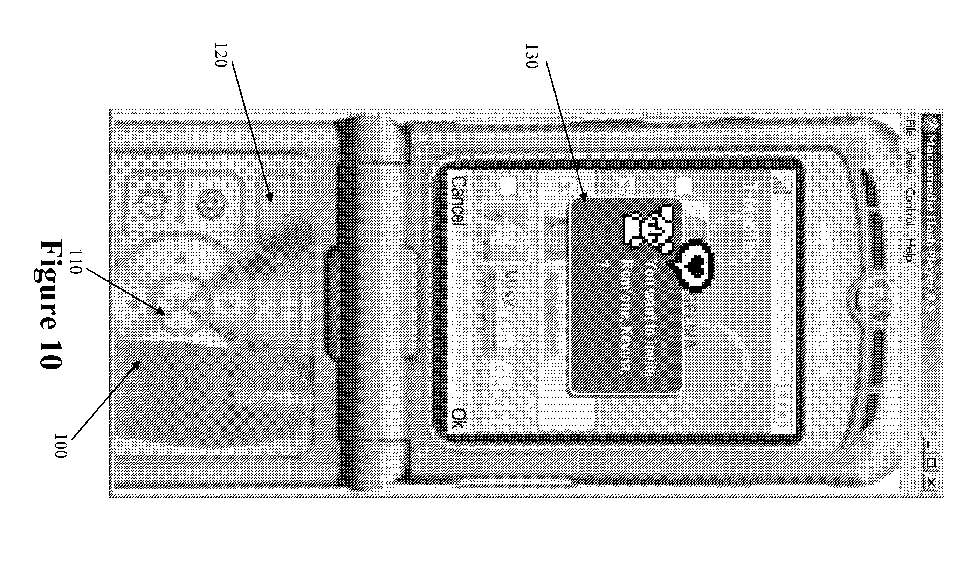

Once the tribe has been defined and basic tribe attributes have been entered, the personalization client may present the user with a tribe creation confirmation user interface similar to that of Figure 8, and the user may be prompted to select the tribe's members. Figure 9 is an exemplary tribe member selection user interface. Once the tribe's members have been selected, the user is given an option to invite the members to participate in the tribe, such as through the user interface illustrated in Figure 10.

In some embodiments, the user can elect to not send such an invitation, the tribe is a locally-defined tribe, and may only be known to and controlled by the user. In such embodiments, by sending an invitation to one or more selected tribe members, the user can indicate that the other invited members are to have some level of knowledge about and/or control over the tribe, and the user can specify the level of such knowledge and/or control. In some embodiments, the system may seek permission of the user creating a tribe before performing certain actions initiated by tribe members.

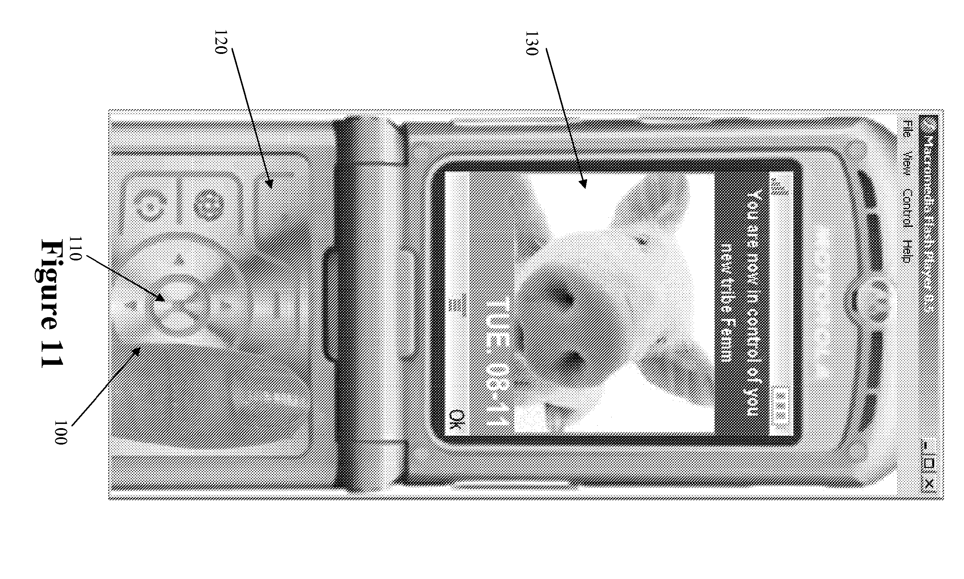

In some embodiments, once the tribe has been fully defined, including, without limitation, the definition of appropriate tribe attributes and the selection of at least one tribe member, the personalization client presents the user with a user interface similar to that of Figure 11 which confirms that the user has created and is in control of the tribe.

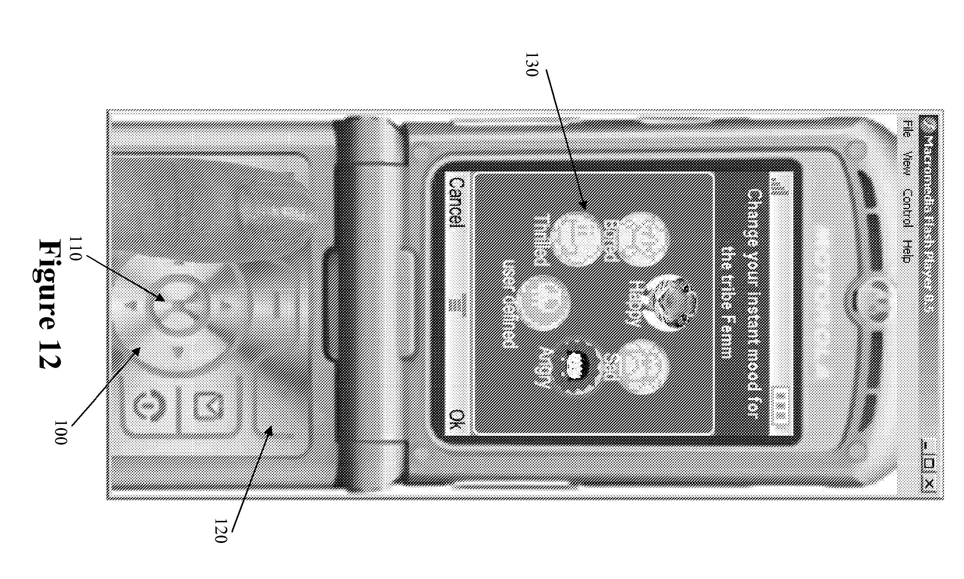

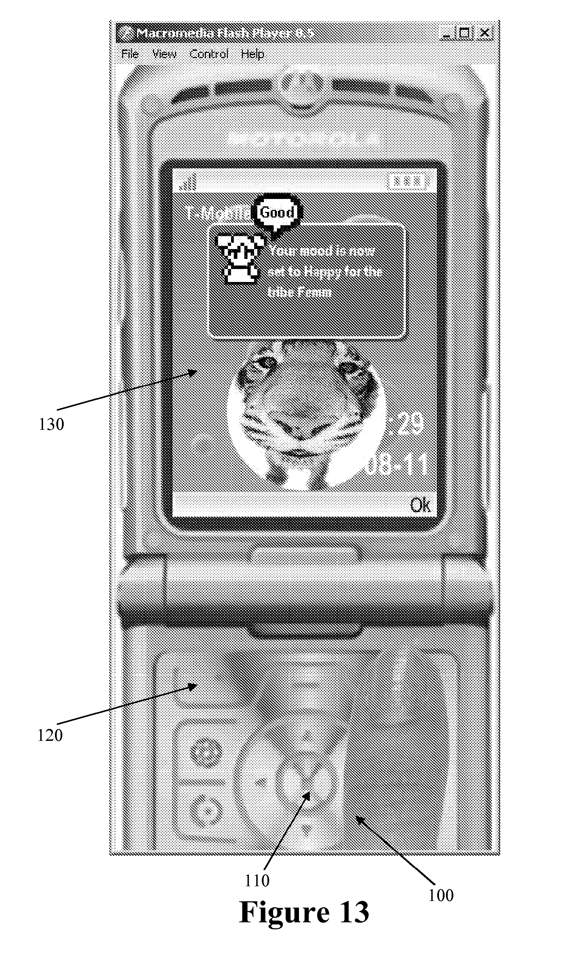

As described above, a feature of the telephone personalization system and methods is the ability to project an attitude to tribe members. Users may frequently wish to alter their projected mood, and Figure 12 is an exemplary tribe mood change user interface. In such an interface, the user simply selects the mood or attitude to be projected to the tribe members, and this new mood selection can be confirmed to the user by a user interface such as that of Figure 13.

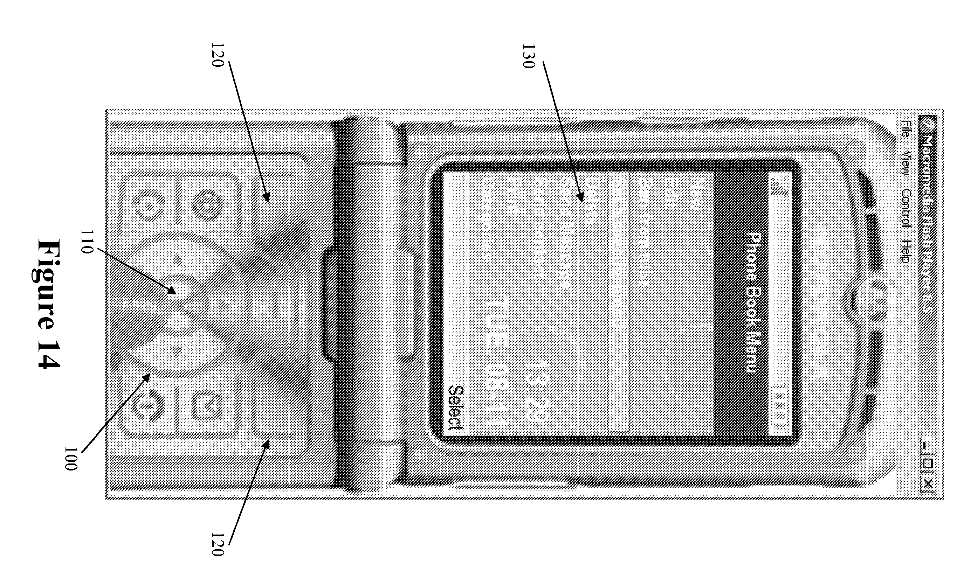

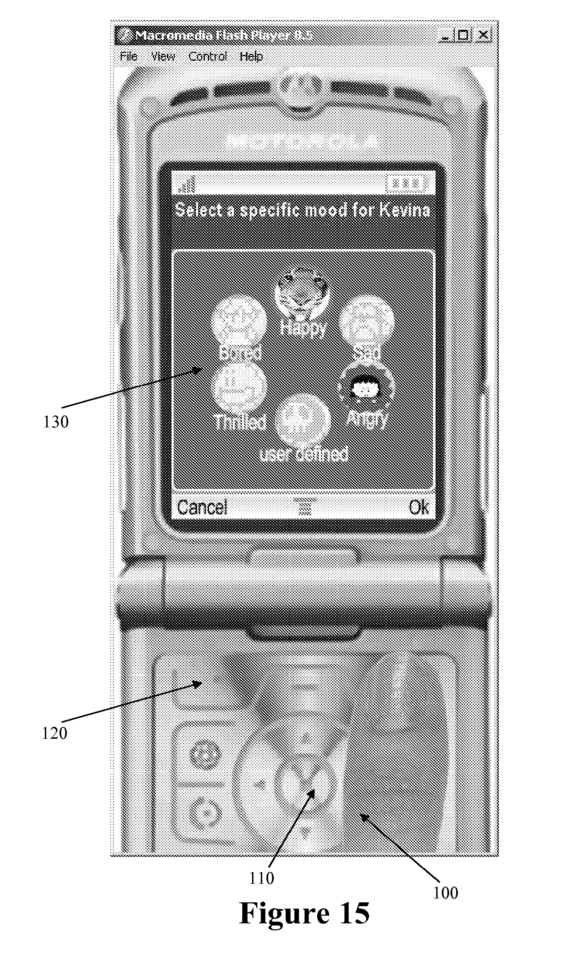

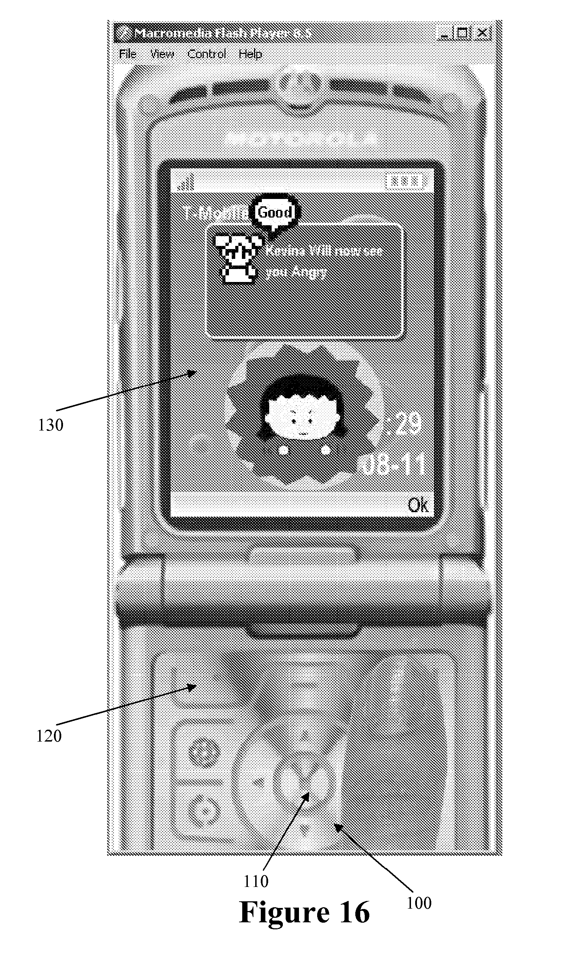

In some embodiments, the personalization client provides enhancements to the menus and other features typically installed on or associated with a telephone. By way of example, without limitation, where a telephone manufacturer or other such party makes available an application programmer interface ("API"), the telephone personalization system and methods can be implemented by the personalization client utilizing the functions available through the API. Figure 14 is an exemplary individual contact menu which has been modified through the use of such an API to include the "Ban from tribe" and "Set a specific mood" commands. By selecting the "Set a specific mood" command, the user can project a mood to a particular contact, and may do so through an individual contact mood selection user interface such as that of Figure 15. In an embodiment, such a selection overrides any mood selections associated with any tribes to which the contact belongs. When the user has selected a desired mood, an individual contact mood selection confirmation user interface similar to that of Figure 16 may be displayed.

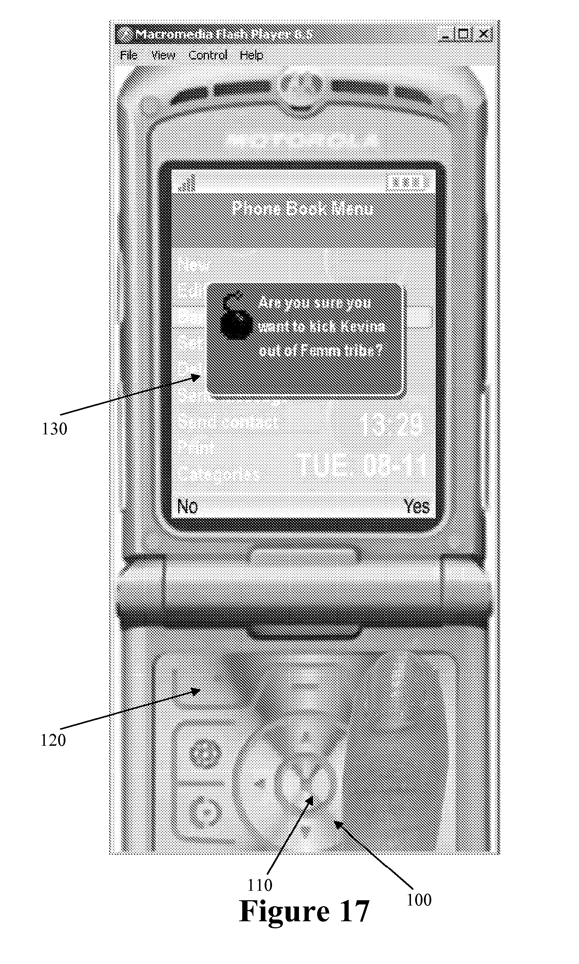

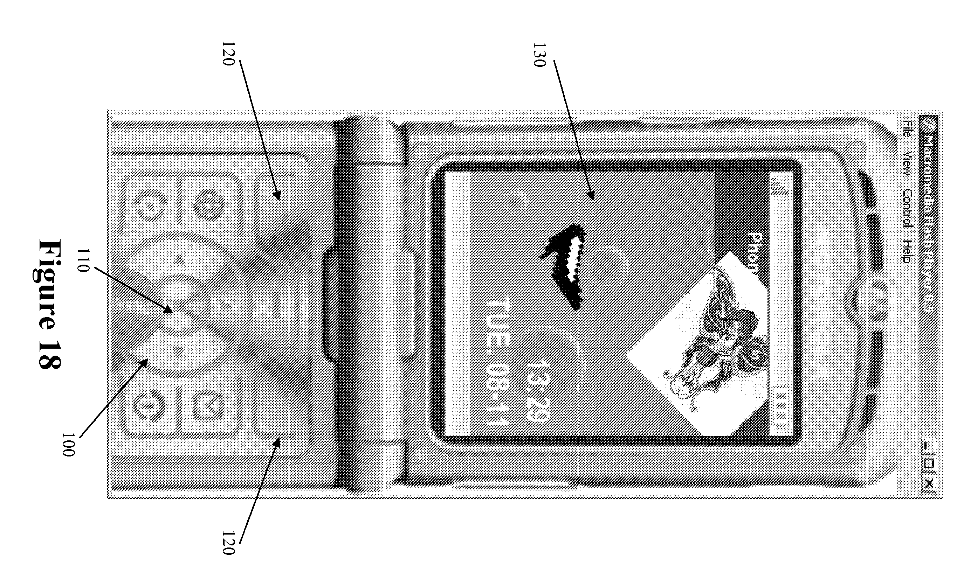

By selecting the "Ban from tribe" command from the individual contact menu of Figure 14, the user can indicate that a contact is to be removed from a tribe. Figure 17 is an exemplary user interface through which a user can confirm that the contact is to be deleted from a tribe. In an embodiment, an animated picture, such as one based on the picture illustrated in Figure 18, may be displayed to illustrate the removal of the contact from the tribe.

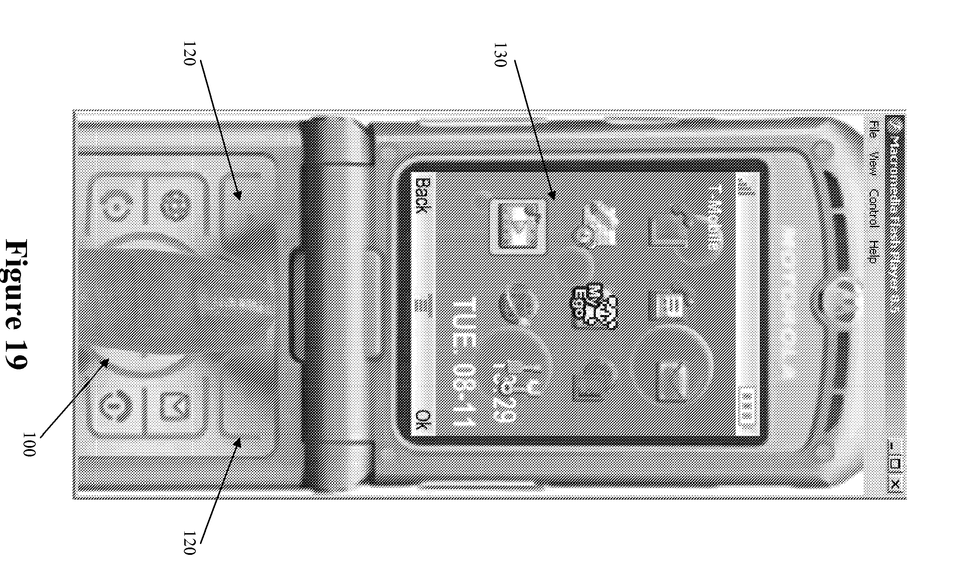

In addition to providing access to features of the telephone personalization system and methods by enhancing the menus and other user interface elements available on a telephone, the personalization client may also allow a user to access the personalization features through a more narrowly tailored user interface or series of user interfaces. By way of example, without limitation, the personalization client allows the personalization features to be accessed through a control panel applet similar to that illustrated in Figure 19.

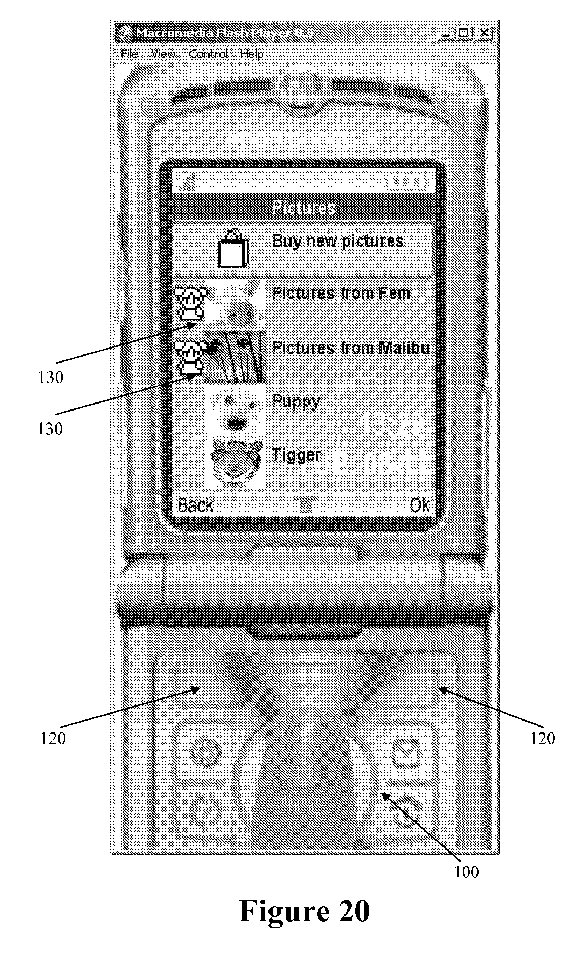

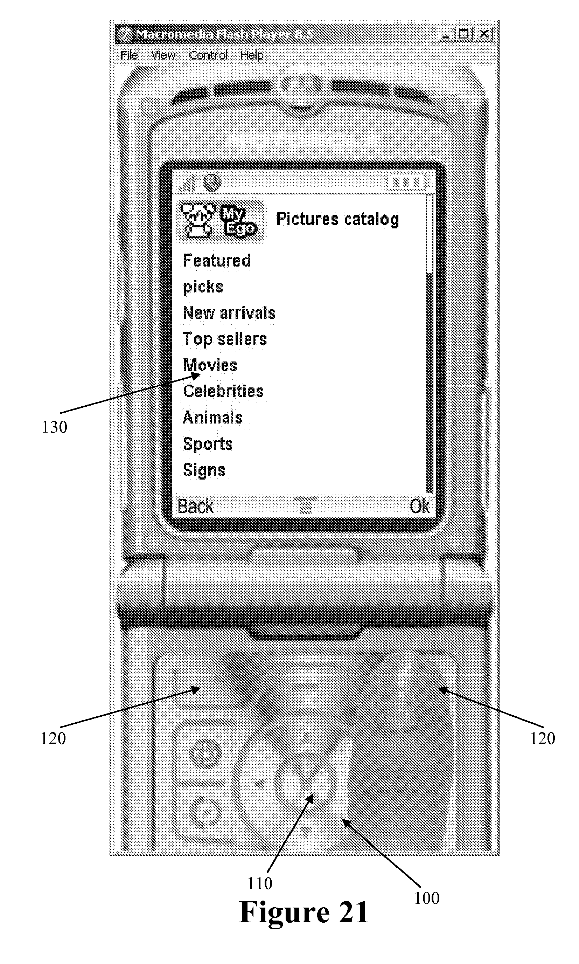

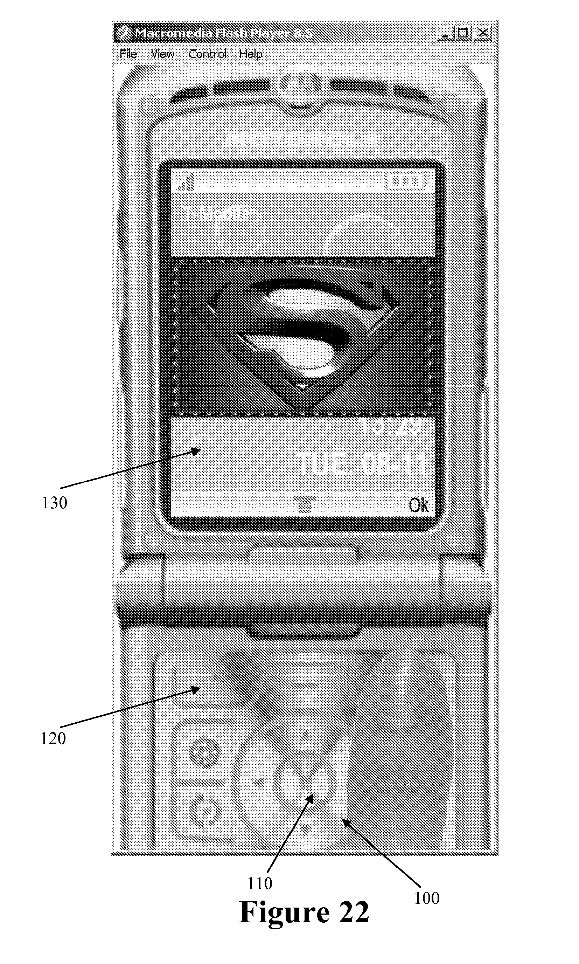

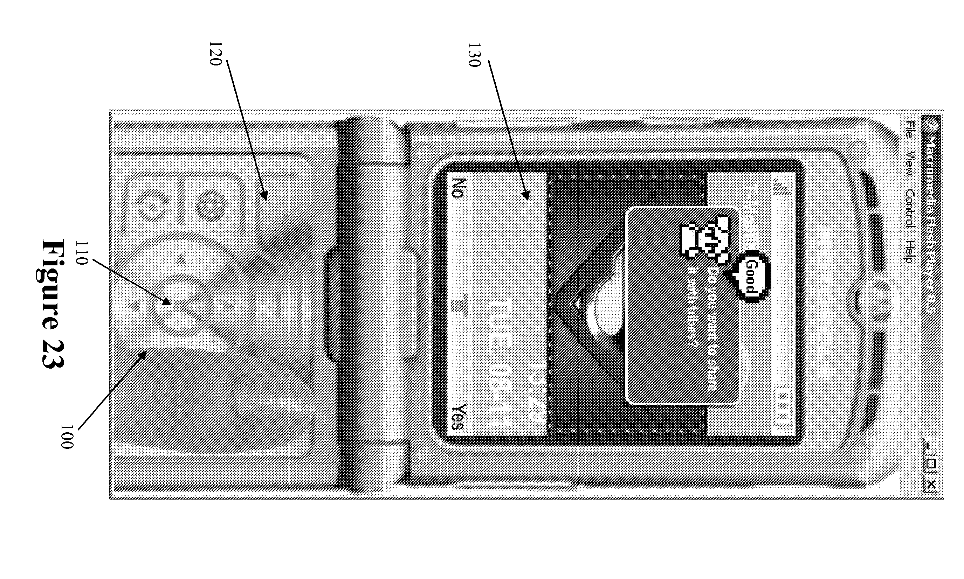

One such personalization feature that can be made available through the control panel applet is the ability to purchase additional pictures that can be used with a tribe. Figure 20 illustrates an exemplary user interface through which a user can indicate a desire to purchase such additional pictures. When the user selects the "Buy new pictures" menu item, the user is presented with a user interface similar to that of Figure 21, through which the user can browse and select from among a catalog of available pictures. The user can select one or more pictures to be purchased or otherwise obtained from such a catalog, and can perform any E-commerce related activities through the telephone. In some embodiments, the cost of purchasing such pictures may be added to the user's telephone bill. Once the user has obtained a picture, the user may be presented with a user interface similar to that of Figure 22, in which the obtained picture(s) are displayed. The user may then be asked whether the obtained picture(s) should be shared with one or more tribes, as illustrated by the user interface in Figure 23, and the user can select the tribe(s) with which the picture(s) are to be shared. In an embodiment, sharing a picture with a tribe comprises permitting the tribe members to view the picture, but the tribe members may not have rights to use the picture for their own purposes.

Through the telephone personalization system and methods described herein, a telephone user can create social networks and project information to members of such social networks; easily distribute SMS, E-mail, or other messages to members of such social networks; and even project mood information to individual contacts. While detailed and specific embodiments of implementing the telephone personalization system and methods via cellular telephone-to-cellular telephone data transmission have been described herein, it will be apparent to those skilled in the art that various changes and modifications, including, but not limited to, interjecting a server as an intermediary can be made therein without departing from the spirit and scope of the telephone personalization system and methods. Thus, it is intended that the present disclosure cover these modifications and variations provided they come within the scope of any appended claims and/or their equivalents.

Appendix A comprises additional information in relation to the systems and methods described herein.

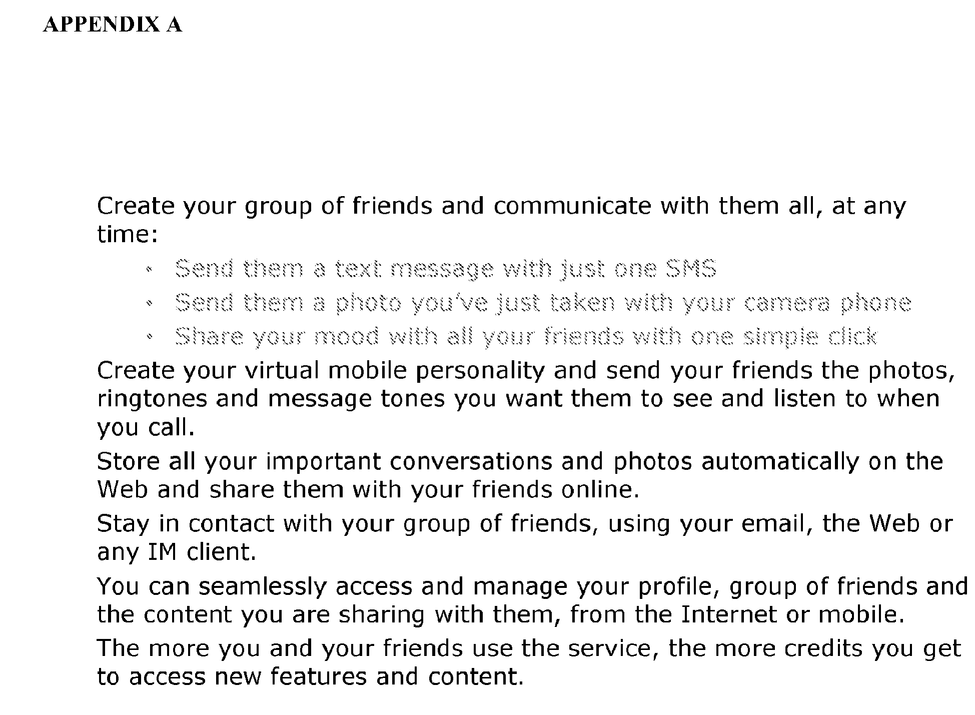

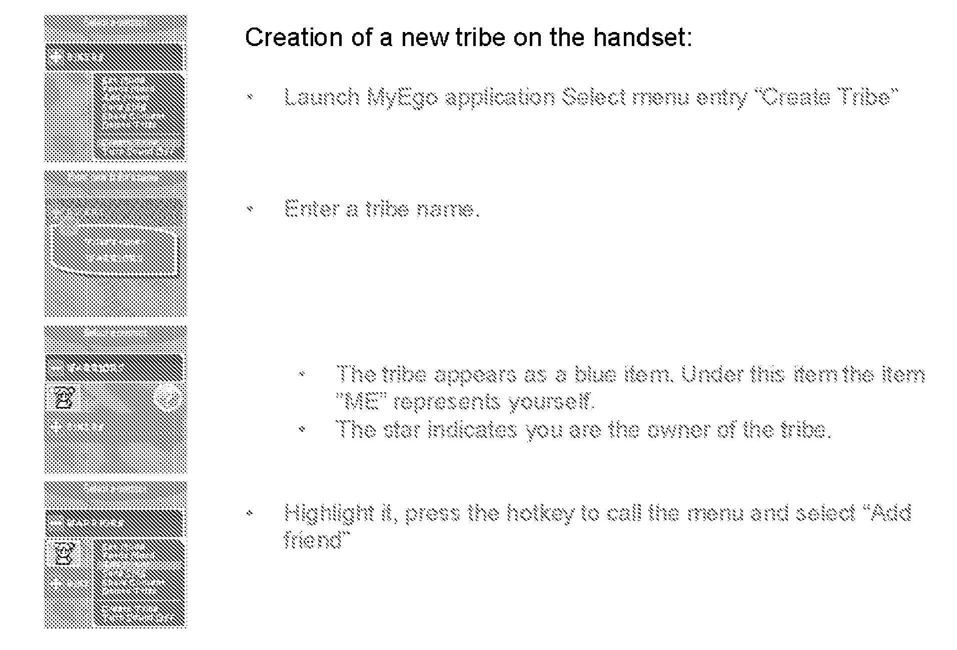

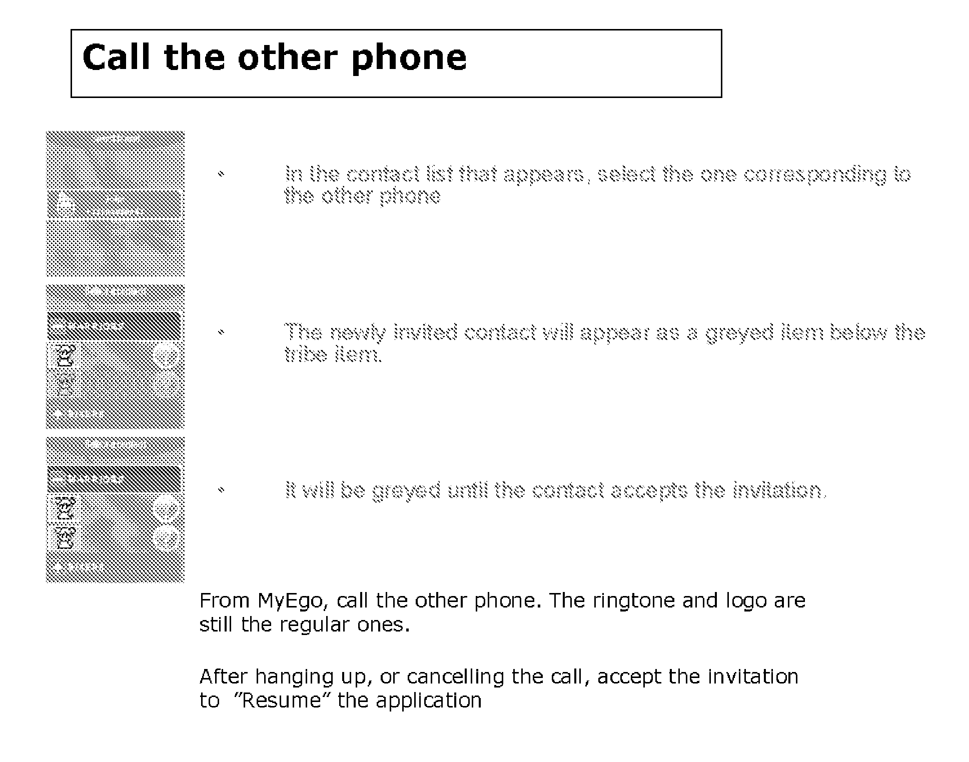

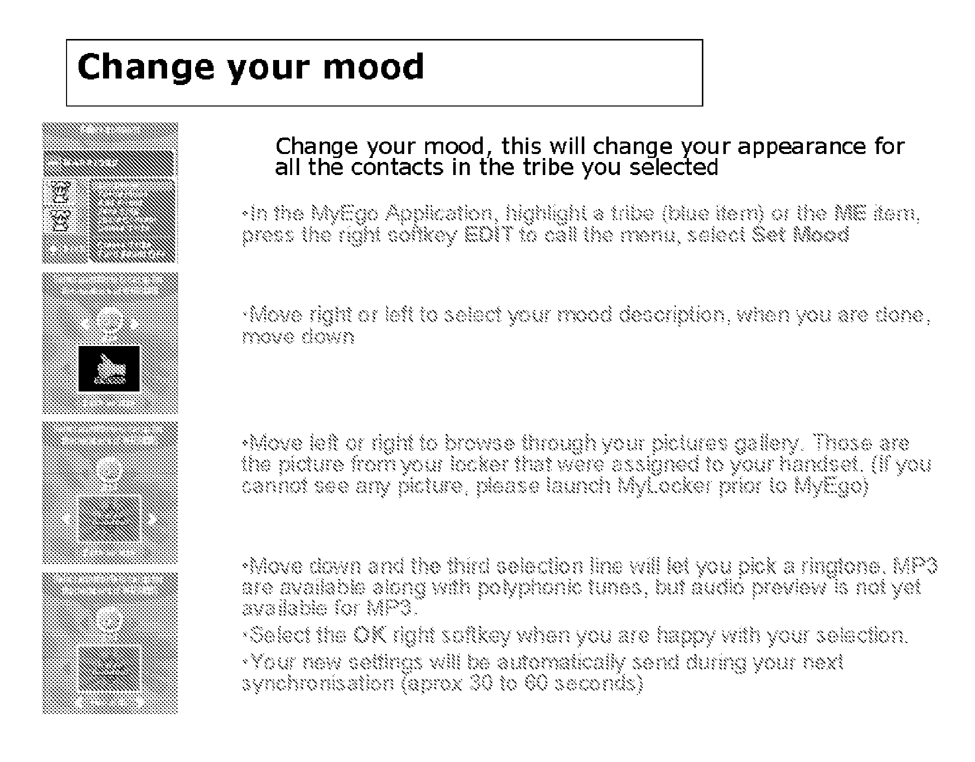

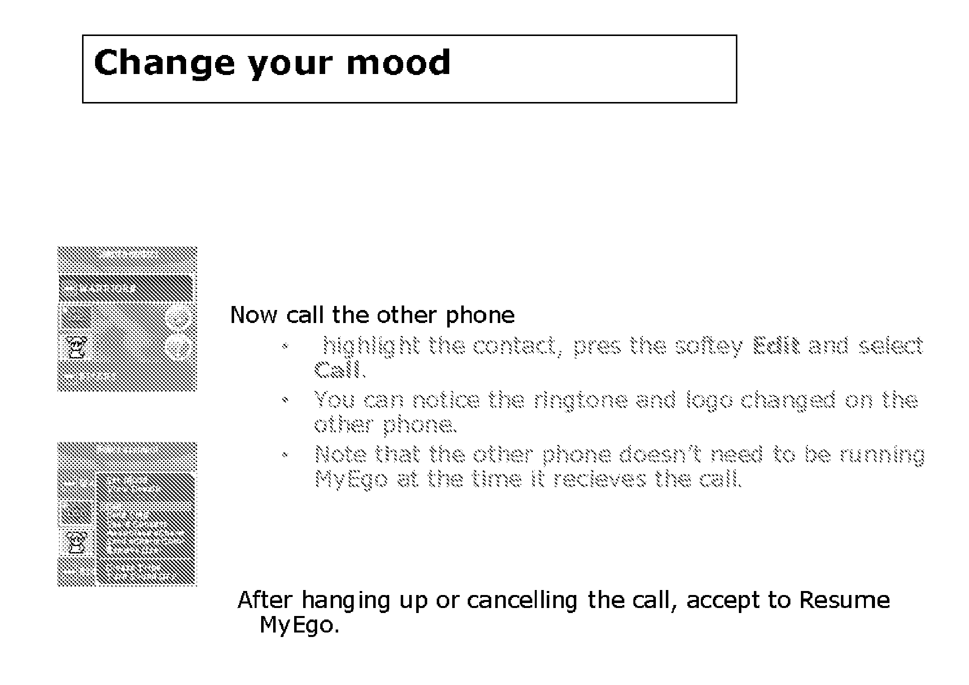

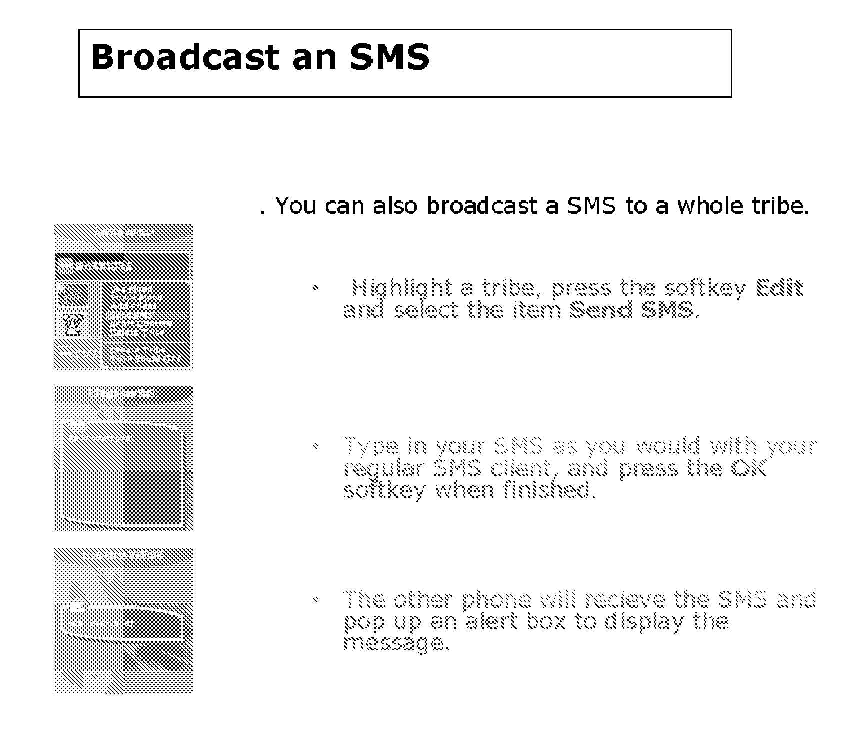

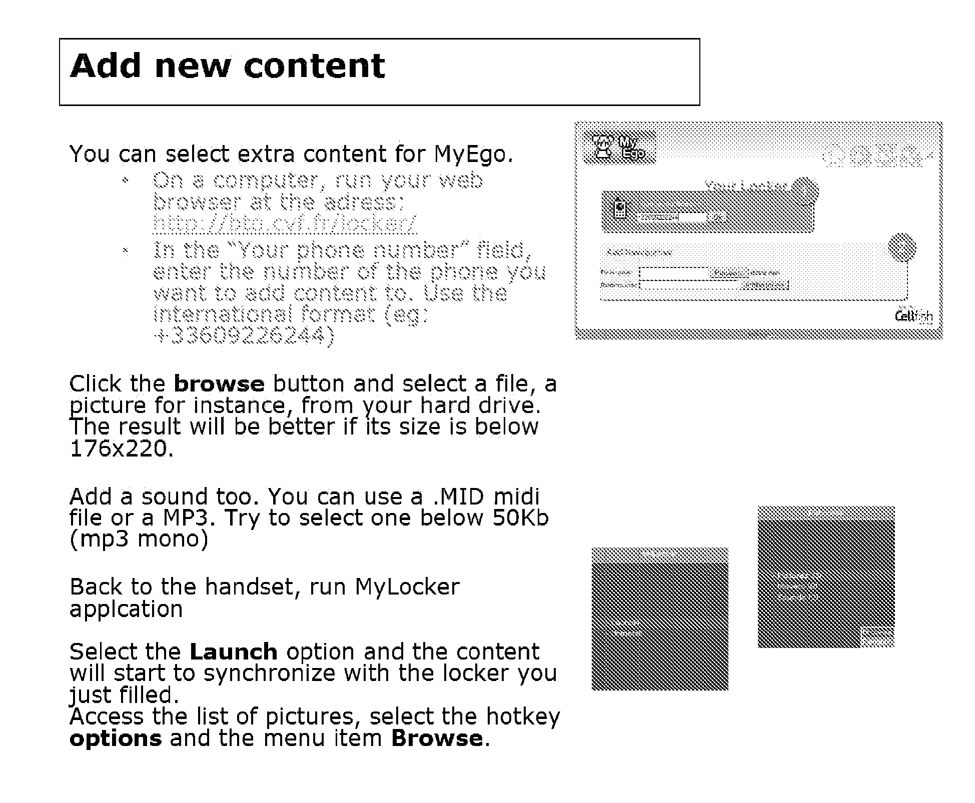

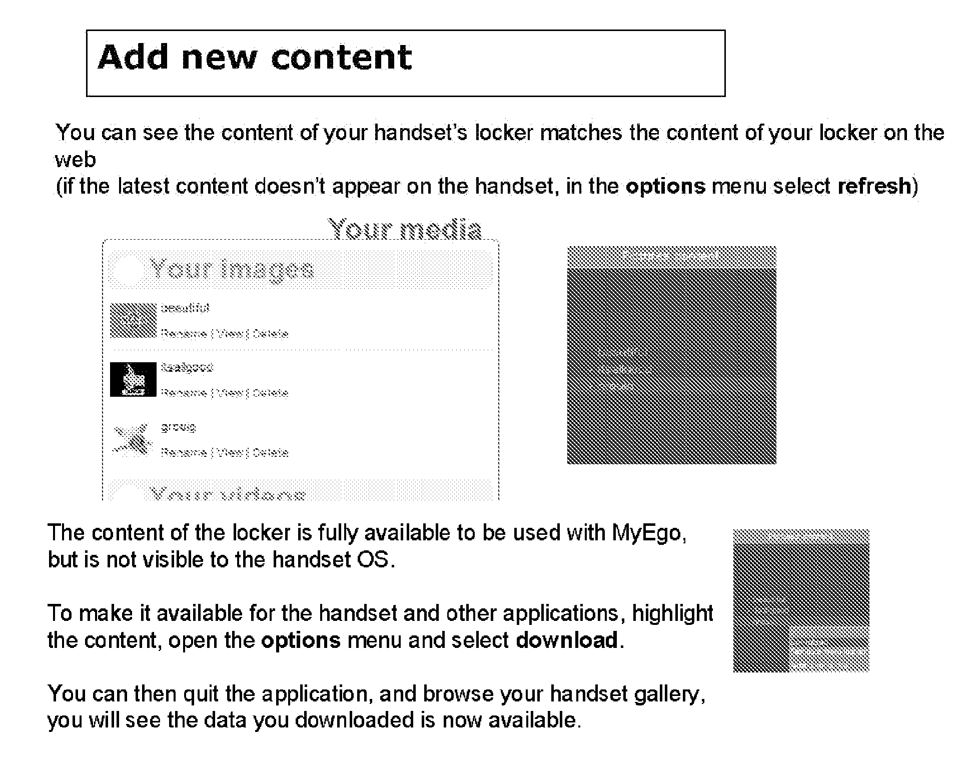

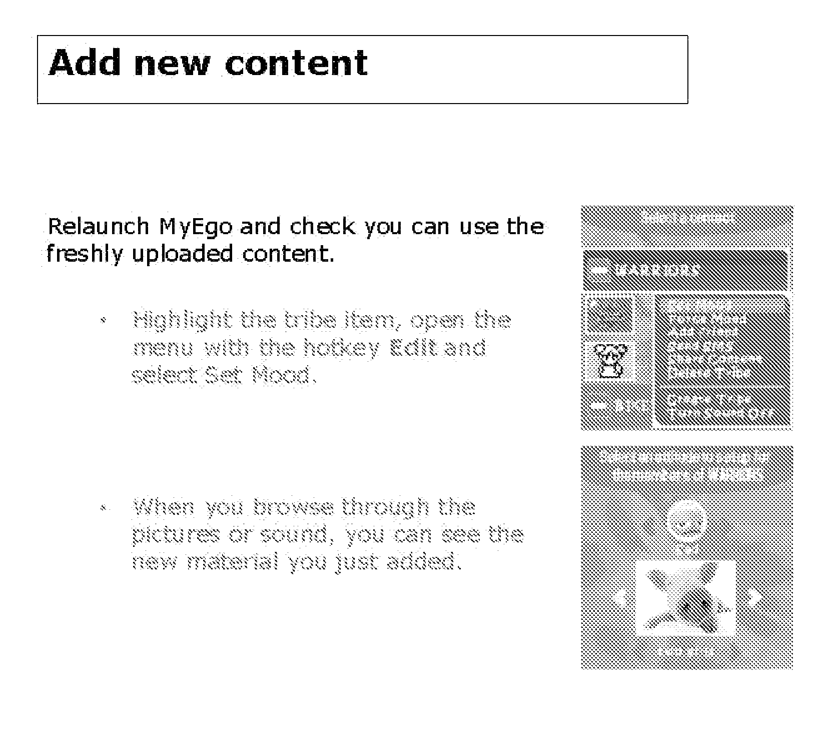

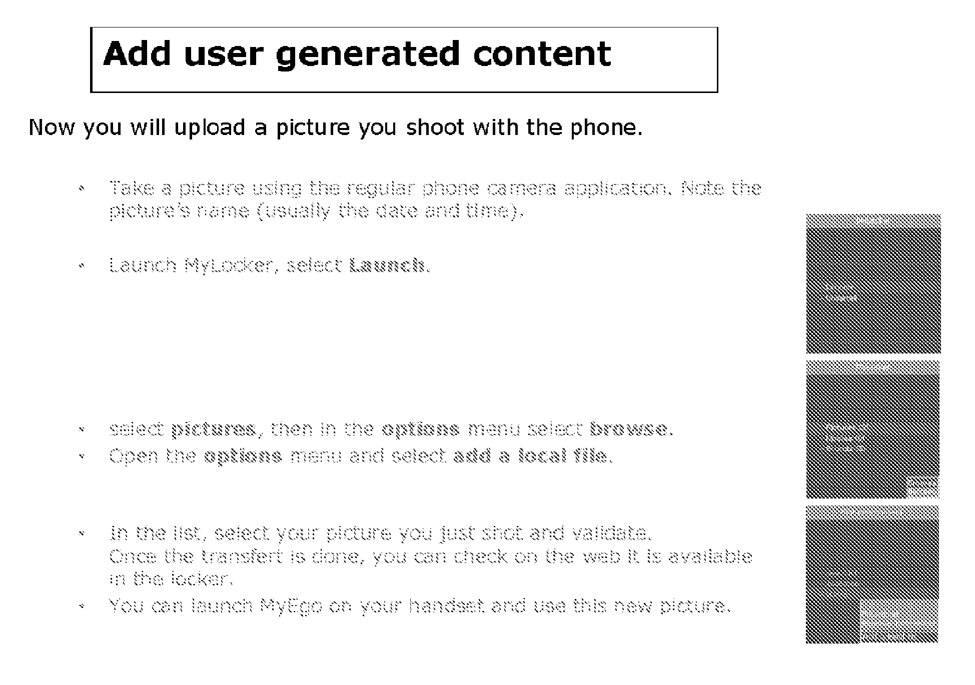

## Claims

1. A method of projecting information about a first user from a first device associated with the first user to at least one device associated with a first group of friends, comprising:
receiving from a user a first set of contacts, wherein each contact in the first set of contacts has device contact information associated therewith;
storing the first set of contacts in a first device associated with the first user;
permitting the user to define a first group of friends, wherein the first group of friends comprises members of the first set of contacts;
storing the first group of friends;
receiving from the user information to be projected to the first group of friends;
retrieving the device contact information from the first set of contacts for each member of the first group of friends;
transmitting the information to the first group of friends; and,
receiving from at least a subset of the devices a confirmation that the information has been associated with the user.

2. The method of Claim 1, wherein the first device is a telephone.

3. The method of Claim 2, wherein the telephone is a cellular telephone.

4. The method of any preceding claim, wherein the device contact information comprises a telephone number.

5. The method of any preceding claim, wherein the device contact information comprises a Uniform Resource Locator.

6. The method of any preceding claim, wherein the device contact information comprises a network address.

7. The method of Claim 6, wherein the network address comprises an Internet Protocol address.

8. The method of any preceding claim, wherein the information comprises a picture, and wherein the step of associating the picture with the user comprises causing the picture to be stored as part of a contact list entry in the device.

9. The method of Claim 8, wherein the information comprises a picture, and wherein the association of the picture with the user causes the device to display the picture when the device receives a call from the user.

10. The method of any preceding claim, wherein the information comprises a picture, and wherein the association of the picture with the user causes the device to display the picture when the device receives a call from the user.

11. The method of Claim 10 or claim 9, wherein the picture comprises a video.

12. The method of any preceding claim, wherein the information comprises a ring tone, and wherein the association of the picture with the user causes the ring tone to be played by the device when the device receives a call from the user.

13. The method of Claim 13, wherein the ring tone further comprises a picture.

14. The method of Claim 14, wherein the ring tone further comprises a video.

15. The method of any preceding claim, further comprising identifying as a second device any device associated with a member of the first group of friends that is not capable of utilizing the information and facilitating the installation of software on the second device such that the second device is capable of utilizing the information.

16. The method of any preceding claim, further comprising formatting the information for transmission using Short Message Service.

17. The method of any preceding claim, further comprising formatting the information for transmission using Hypertext Transmission Protocol.

18. The method of any preceding claim, wherein the first group of friends comprises a plurality of members.

19. A method of projecting information about a first user from a first telephone associated with the first user to at least one telephone associated with a first group of friends, comprising:
receiving from a user a first set of contacts, wherein each contact in first the set of contacts has at least one telephone number associated therewith;
storing the first set of contacts in a first telephone associated with the first user;
permitting the user to define a first group of friends, wherein the first group of friends comprises members of the first set of contacts;
storing the first group of friends;
identifying as a second telephone any telephone associated with a member of the first group of friends that is not capable of utilizing the information and facilitating the installation of software on the second telephone such that the second telephone is capable of utilizing the information;
receiving from the user information to be projected to the first group of friends;
retrieving the telephone contact information from the first set of contacts for each member of the first group of friends;
transmitting the information to the first group of friends; and,
receiving from at least a subset of the devices a confirmation that the information has been associated with the user.
